# EUROPEAN PATENT SPECIFICATION

(11) **EP 2 337 451 B1**
(45) Date of publication and mention of the grant of the patent: **20.11.2013**
(21) Application number: 09778816.0
(22) Date of filing: 05.10.2009
(51) Int. Cl.: A01N 41/10, A01N 25/32

(54) **HERBICIDAL COMPOSITIONS COMPRISING MESOTRIONE AND METHODS OF CONTROLLING WEEDS IN TURFGRASSES**
HERBIZIDE ZUSAMMENSETZUNGEN, UMFASSEND MESOTRION, UND VERFAHREN ZUR BEKÄMPFUNG VON UNKRÄUTERN IN RASENGRÄSERN
COMPOSITIONS HERBICIDES COMPRENANT DE LA MESOTRIONE ET PROCEDE DE REGULATION DE PLANTES NUISIBLES DANS DE LA PELOUSE

(30) Priority: 06.10.2008 US 102936 P
(43) Date of publication of application: 29.06.2011
(73) Proprietor: Syngenta Participations AG, 4058 Basel (CH)
(72) Inventor: JAMES, John, Robert, Greensboro, NC 27409 (US); RAWLS, Eric, Vero Beach, FL 32967 (US)
(74) Representative: Lee, Michael David
(86) International application number: PCT/EP2009/007098
(87) International publication number: WO 2010/040485

(56) References cited:
- WO-A2-2007/011847
- WO-A2-2008/011511
- WO-A2-2008/122395
- WO-A2-2009/027027
- WO-A2-2009/027028
- WO-A2-2009/089165
- DE-A1- 10 237 461
- US-A1- 2003 078 167
- US-A1- 2007 010 399

## Description

The present invention relates to a method for controlling weeds in turf without causing significant injury to the turfgrass using a composition comprising a herbicidally effective amount of mesotrione, and a safener.

High quality, healthy turf is essential, for example, for lawns, golf courses, sports areas and adjacent to roads. Weeds can decrease the quality of turf due to the contrast in colour and texture between the turfgrass plants and the weeds. In addition, weeds compete with the turfgrass plants for available water and nutrients, usually resulting in thinning of desirable turfgrass cover. Accordingly, there exists a need for novel methods to enhance turfgrass quality to provide high quality, healthy turf.

HPPD inhibitors are known to be an effective herbicide against weeds in various crops. However, they can cause phytotoxicity towards certain turfgrass species, including chlorosis, burning and stunting. Phytotoxicity is particularly severe when HPPD inhibitors are applied to warm season turfgrasses. Accordingly, there exists a need to reduce the phytotoxicity of HPPD inhibitors against turfgrass, especially warm season turfgrasses.

WO2007/011847 discloses that granular formulations of mesotrione can help reduce the phytotoxicity of mesotrione against turfgrass. However, it is desirable to further improve turf safety of mesotrione.

Surprisingly, it has now been found that the phytotoxic effects of mesotrione can be further reduced when applied to turfgrass in combination with certain safeners, without loss of herbicidal efficacy. In particular, it has been found that the phytotoxic effects of mesotrione, or a salt or metal chelate thereof, can be further reduced when applied in combination with certain safeners, without loss of herbicidal efficacy.

Mixtures of mesotrione with various other herbicides and plant growth regulators, optionally in combination with safeners are known for example in WO08/011506, WO08/011509, WO08/011511, WO08/011283, GB2452374, GB2452375, GB2452376, GB2452377, WO09/019431, WO09/019432, WO09/027032, WO09/027029, WO09/027033, WO09/027030, WO09/027034, WO09/027031, WO09/027028, and WO09/027027.

US2003/078167 and US2007/010399 describe herbicidal compositions comprising herbicides and safeners.

According to the present invention, there is provided a method of controlling weeds in turfgrass without causing significant injury to the turfgrass, comprising applying to the turfgrass a composition comprising a herbicidally effective amount of mesotrione
and a safener compound selected from the group consisting of cyprosulfamide and the compound of formula IV 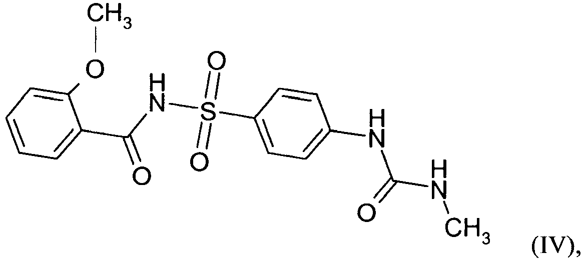 with the proviso that the composition does not consist of mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; mesotrione, at least one plant growth regulator and the compound of formula IV; mesotrione, atrazine and cyprosulfamide; mesotrione, clopyralid and cyprosulfamide; mesotrione, ethofumesate and cyprosulfamide; mesotrione, fenoxaprop-ethyl and cyprosulfamide; mesotrione, imazaquin and cyprosulfamide; mesotrione, oxadiazon and cyprosulfamide; mesotrione, pendimethalin and cyprosulfamide; mesotrione, primisulfuron and cyprosulfamide; or mesotrione, at least one plant growth regulator and cyprosulfamide.

In an alternative embodiment of the method, composition does not comprise mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; mesotrione, at least one plant growth regulator and the compound of formula IV; mesotrione, atrazine and cyprosulfamide; mesotrione, clopyralid and cyprosulfamide; mesotrione, ethofumesate and cyprosulfamide; mesotrione, fenoxaprop-ethyl and cyprosulfamide; mesotrione, imazaquin and cyprosulfamide; mesotrione, oxadiazon and cyprosulfamide; mesotrione, pendimethalin and cyprosulfamide; mesotrione, primisulfuron and cyprosulfamide; or mesotrione, at least one plant growth regulator and cyprosulfamide.

In a further embodiment of the present invention, there is provided a method of controlling weeds in turfgrass without causing significant injury to the turfgrass, comprising applying to the turfgrass a composition consisting essentially of a herbicidally effective amount of mesotrione and a safener selected from the group consisting of cyprosulfamide and a compound of formula IV. Suitably, the composition consists of a herbicidally effective amount of mesotrione, and a safener selected from the group consisting of cyprosulfamide and a compound of formula IV.

HPPD inhibitors are selective herbicides that inhibit the enzyme 4-hydroxyphenyl-pyruvate dioxygenase, and work by affecting carotenoid biosynthesis. For example, the HPPD inhibitors include those selected from the group consisting of triketones, isoxazoles, pyrazoles, benzobicyclon and ketospiradox. Further details of the individual compounds which fall within the triketones, isoxazoles and pyrazoles may be found in PCT Publication Number WO2005/053407 (the disclosure of which is herein incorporated by reference) but there may be mentioned mesotrione, sulcotrione, isoxaflutole, isoxachlortole, benxofenap, pyrazolynate and pyrazoxyfen. Further HPPD inhibitors include tembotrione, topramezone, and all tautomeric forms of any of the above compounds. A complete list of all commercially available HPPD inhibitors may be found in the Pesticide Manual (published by the British Crop Protection Council, 14th edition).

Mesotrione (2-(2'-nitro-4'-methylsulphonylbenzoyl)-1,3-cyclohexanedione) is a member of the triketone class of HPPD inhibitors. In the acid form, its structure can be represented as:

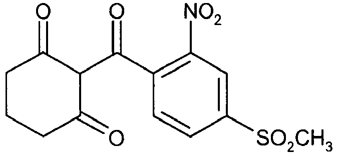

In addition to the acid form, mesotrione also forms salts and metal chelate, for example, a copper chelate. These metal chelates are disclosed, *inter alia,* in US Patent No. 5,912,207 where they are shown to have unexpectedly superior stability in certain environments when compared to unchelated mesotrione.

Mesotrione is best known for its ability to control a wide spectrum of broadleaf weeds at a wide range of growth stages when applied post-emergence on corn and turfgrass. It is typically used at a low rate (100-225 grams of active ingredient per hectare depending on herbicide formulation on application timing) to control weeds which are present at application and which emerge for up to four weeks afterwards. Once applied, mesotrione is rapidly absorbed by the leaves, shoots, roots and seeds. In susceptible weeds, it disrupts carotenoid biosynthesis, an essential process for plant growth and this leads to plant death. Unlike weeds, corn plants and certain turfgrass species are able to tolerate mesotrione by rapidly breaking down the active compound into inactive compounds.

As used herein, the designation 'mesotrione' includes the salts and chelated forms of mesotrione as well as the acid form and also includes any enolic tautomeric forms that may give rise to geometric isomers. Furthermore, in certain cases, the various substituents and/or chelated forms may contribute to optical isomerism and/or stereoisomerism. All such tautomeric forms, racemic mixtures and isomers are included within the scope of the present invention.

In one embodiment of the invention, the mesotrione is present as the acid form. In a further embodiment, mesotrione is present as a salt or a metal chelate.

Suitable salts of mesotrione include salts of cations or anions which are known and accepted in the art for the formation of salts for agricultural or horticultural use. Such salts may be formed, for example, using amines, alkali metal bases, alkaline earth metal bases and quaternary ammonium bases.

Metal chelates of 2-(substituted benzoyl)-1,3-cyclohexanedione compounds including mesotrione are described, *inter alia,* in US Patent No. 5,912,207. In one embodiment, suitable metal chelates of mesotrione have the general structure: 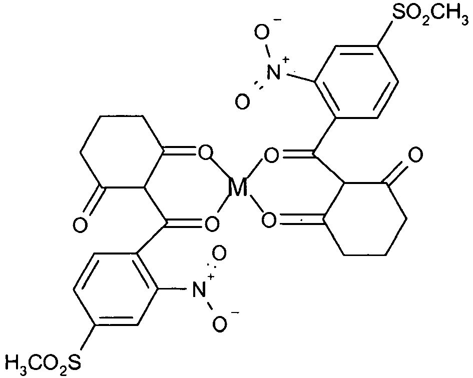 wherein M represents a di- or trivalent metal ion.

Suitably, the di- or trivalent metal ion may be a Cu²⁺, Co²⁺, Zn^{Z+}, Ni²⁺, Ca²⁺, Al³⁺, Ti³⁺ or Fe³⁺ ion. More suitably, the metal ion may be a divalent transition metal ion such as Cu²⁺, Ni²⁺, Zn²⁺ and Co^{Z+}. More suitably the metal ion may be Cu²⁺ and Zn²⁺ and most suitably Cu²⁺.

Herbicidal metal chelates of mesotrione for use in this invention may be prepared by the methods described in the aforementioned US Patent, or by the application and adaptation of known methods used or described in the chemical literature. In particular, any appropriate salt which would be a source of a di- or trivalent metal ion may be used to form the metal chelate of the dione compound in accordance with this invention. Particularly suitable salts include chlorides, sulphates, nitrates, carbonates, phosphates and acetates.

The phrase "without causing significant injury to the turfgrass" means without resulting in unacceptable levels of phytotoxicity, bleaching or stunting of the turfgrass, and/or an unacceptable reduction in turfgrass colour and quality. Turfgrass colour and quality is an industry standard assessment, based on a scale of 1 to 9, with 9 indicating dark green co lour of turf and the highest quality. Assessments of turfgrass quality are based on several factors, including stunting, uniformity and density of the turf stand. A turfgrass quality of 6 or less is deemed to be unacceptable.

The phrase "application to the turfgrass" as used herein includes application directly to the turfgrass itself, application to the locus of the turfgrass, application to weeds growing in the turfgrass, and application to turfgrass seeds, and application to bare ground on which turfgrass seeds have been or will be sown. The 'locus' is intended to include soil, seeds, and seedlings as well as established vegetation.

The term "herbicidally effective amount" indicates the quantity of mesotrione which is capable of producing a controlling or modifying effect on the growth of plants. Controlling or modifying effects include all deviation from natural development, for example: killing, retardation, leaf burn, albinism, dwarfing and the like. For example, plants that are not killed are often stunted and non-competitive with flowering disrupted. The term 'plants' refers to all physical parts of a plant, including seeds, seedlings, saplings, roots, tubers, stems, stalks, foliage and fruits.

The term "safener" as used herein means a compound that reduces the phytotoxic effects of the herbicide against turfgrass. A safener (or antidote) therefore has the effect of enhancing herbicide selectivity by reducing or eliminating its phytotoxic potential to the turfgrass. The term "antidotally effective amount" describes an amount of a safener compound which counteracts to some degree a phytotoxic response of a beneficial crop to a herbicide.

In one embodiment of the present invention, the safener is cyprosulfamide. In another embodiment of the present invention, the safener is a compound of formula IV.

In one embodiment, the composition is a liquid. A liquid composition includes formulation types such as solutions, suspensions or emulsions and the like.

In another embodiment, the composition is a solid. A solid composition includes formulation types such as granules, powders, dusts, plates, tablets, sticks and the like. For example, the formulation may be a granule. Any suitable granules may be used in accordance with the present invention, including fertilizer granules and inert carrier granules. In one embodiment, the granules are fertilizer granules.

The ratio of mesotrione to safener may vary depending on the choice of herbicide, choice of safener, formulation type and variety of turfgrass species to which the composition will be applied. The person skilled in the art is familiar with determining the appropriate ratio for any given scenario. Typically, the ratio of herbicide to safener is in the range from about 50:1 to 1:50 by weight. In one embodiment, the ratio of herbicide to safener is from 20:1 to 1:1 by weight.

If desired, the present invention includes the use of mixtures of mesotrione and at least one further HPPD inhibiting herbicide, for example to enhance spectrum of weed control. It is also possible to use mixtures of more than one safener in conjunction with the present invention, for example to enhance selectivity (i.e. to provide reduced injury of the herbicidal composition to a broader range of desirable turfgrass species).

In particular, there may be mentioned the following mixtures of HPPD inhibiting herbicides and safeners for use in the method of the present invention: mesotrione and cyprosulfamide; mesotrione and a compound of formula IV.

In one embodiment of the present invention, the HPPD inhibitor is mesotrione and the safener is cyprosulfamide. In a further embodiment of the present invention, the HPPD inhibitor is mesotrione and the safener is a compound of formula IV.

The rate at which the composition of the invention is applied will depend upon the particular type of weed to be controlled, the degree of control required, the turfgrass species and the timing and method of application. In general, the compositions of the invention can be applied at an application rate of between 0.005 kilogram active ingredient/hectare (kg/ha) and about 5.0kg active ingredient/ha. An application rate of between about 0.1 kg ai/ha and about 3.0 kg ai/ha is preferred, with an application rate of between about 0.5 kg ai/ha and 1.2 kg ai/ha being especially preferred.

The composition of the invention may be used to control a large number of agronomically important weeds, including monocotyledonous weeds and dicotyledonous weeds.

For example, the invention may be used to control dicotyledonous weeds such as *Abutilon* spp., *Ambrosia* spp., *Amaranthus* spp., *Chenopodium* spp., *Erysimum* spp., *Euphorbia* spp., *Fallopia* spp., *Galium* spp., *Hydrocotyle* spp., *Ipomoea* spp., *Lamium* spp., *Meclicago* spp., *Oxalis* spp., *Plantago* spp., *Polygonum* spp., *Richardia* spp., *Sicla* spp., *Sinapis* spp., *Solanum* spp., *Stellaria* spp., *Taraxacum* spp., *Trifolium* spp., *Veronica* spp., *Viola* spp. and *Xanthium* spp..

The invention may also be used to control monocotyledonous weeds such as *Agrostis* spp., *Alopecurus* spp., *Apera* spp., *Avena* spp., *Brachiaria* spp., *Bromus* spp., *Digitaria* spp., *Echinochloa* spp., *Eleusine* spp., *Eriochloa* spp., *Leptochloa* spp., *Lolium* spp., *Ottochloa* spp., *Panicum* spp., *Paspalum* spp., *Phalaris* spp., *Poa* spp., *Rottboellia* spp., *Setaria* spp., *Sorghum* spp., both intrinsically sensitive as well as resistant (e.g. ACCase and/or ALS resistant) biotypes of any of these grass weeds, as well as broadleaf monocotyledonous weeds such as *Commelina* spp., *Monochoria* spp., *Sagittaria* spp. and sedges such as *Cyperus* spp. and *Scirpus* spp..

More specifically, among the weeds which may be controlled by the composition of the invention, there may be mentioned monocotyledonous weeds such as barnyard grass (*Echinochloa crus-galli*), large and smooth crabgrass (*Digitaria sanguinalis, Digitaria ischaemum),* goosegrass (*Eleusine indica),* bent grass (*Agrostis* spp.) yellow foxtail (*Setaria glauca),* yellow nutsedge (*Cyperus esculentus),* windmillgrass (*Chloris verticillata)* and nimblewill (*Muhlenbergia schreberi),* and dicotyledonous weeds such as dandelion (*Taraxacum* spp.), white and red clover (*Trifolium* spp.), chickweed (*Stellaria media),* henbit (*Lamium amplexicaule),* corn speedwell (*Veronica arvensis),* oxalis (*Oxalis* spp.), buckhorn and broadleaf plantain (*Plantago lanceolata, Plantago major),* dollar weed (*Hydrocotyle umbellata),* FL pusley (*Richardia scabra),* lambsquarters (*Chenopodium* spp.), knotweed (*Fallopia* spp.), ragweed (*Ambrosia artemisiifolia),* wild violets (*Viola* spp.), pigweed (*Amaranthus* spp.), black medic (*Medicago lupulina),* hedge weed (*Erysimum officinale),* buttercup (*Ranunculus sardous),* carpetweed (*Mollugo verticillata),* curly dock (*Rumex cripsus*), florida betony (*Stachys floridana*)*,* galinsoga (*Galinsoga ciliata*)*,* ground ivy (*Glechoma hederacea),* healall (*Prunella vulgaris),* lawn burweed (*Saliva sessilis*), marestail (*Conyza canadensis*), common purslane (*Portulaca oleracea),* shepherd's purse (*Capsella bursa-pastoris*), sowthistle (*Sanchus oleraceus*), swinecress (*Coronopus didymus*), canada thistle (*Cirsium arvense*), verbena (*Verbena hastata*) and wild carrot (*Daucus carota*)*.*

For the purposes of the present invention, the term 'weeds' includes undesirable crop species such as volunteer crops. For example, in the context of turf grass crops such as on a golf course, creeping bentgrass putting green turf can be considered a 'volunteer' if found in a fairway section where a different variety of grass is being managed. The other grasses listed below can, similarly, be considered weeds when found in the wrong place.

The benefits of the present invention are seen most when the composition is applied to kill weeds in established turfgrass. The present invention may be applied to both cool-season turf grasses and warm-season turf grasses.

Cool season turfgrasses include, for example: Bluegrasses (*Poa* L.), such as Kentucky Bluegrass (*Poa pratensis* L.), Rough Bluegrass (*Poa trivialis* L.), Canada Bluegrass (*Poa compressa* L.) and Annual Bluegrass (*Poa annua* L.); Bentgrasses (*Agrostis* L.), such as Creeping Bentgrass (*Agrostis palustris* Huds.), Colonial Bentgrass (*Agrostis tenius* Sibth.), Velvet Bentgrass (*Agrostis canina* L.) and Redtop (*Agrostis alba* L.); Fescues *(Festuca* L.), such as Creeping Red Fescue (*Festuca rubra* L.), Chewings Fescue (*Festuca rubra* var. commutata Gaud.), Sheep Fescue *(Festuca ovina* L.), Hard Fescue *(Festuca longifolia),* Tall Fescue (*Festuca arundinacea* Schreb.), Meadow Fescue (*Festuca elatior* L.); Ryegrasses (*Lolium L.*), such as Perennial Ryegrass (*Lolium perenne* L.), Annual (Italian) Ryegrass (*Lolium multiflorum* Lam.); Wheatgrasses *(Agropyron* Gaertn.), such as Fairway Wheatgrass *(Agropyron cristatum* (L.) Gaertn.), Western Wheatgrass (*Agropyron smithii* Rydb.); Smooth Brome (*Bromus inermis* Leyss.); and Timothy (*Phleum* L.)*.*

Examples of warm season turfgrasses are Bermudagrasses (*Cynodon* L. C. Rich), Zoysiagrasses (*Zoysia* Willd.), St. Augustinegrass (*Stenotaphrum secundatum* (Walt.) Kuntze), Centipedegrass (*Eremochloa ophiuroides* (Munro.) Hack.), Carpetgrass (*Axonopus* Beauv.), Bahiagrass (*Paspalum notatum* Flugge.), Kikuyugrass (*Pennisetum clandestinum* Hochst. ex Chiov.), Buffalograss (*Buchloe dactyloides* (Nutt.) Engelm.), Centipedegrass (*Eremochloa* spp), Zoysia grass (*Zoysia* spp.) and Seashore paspalum (*Paspalum vaginatum* swartz).

Warm season turfgrasses are more susceptible to injury by application of HPPD inhibitors than cool season turfgrasses. In one embodiment, the composition is applied to warm season turfgrass.

The present invention may be applied to turfgrass that has been made tolerant to pests and pesticides, including herbicides or classes of herbicides (and, suitably, HPPD inhibiting herbicides), as a result of conventional methods of breeding or genetic engineering. Tolerance to herbicides means a reduced susceptibility to damage caused by a particular herbicide compared to conventional turfgrasses. Turfgrass can be modified or bred so as to be tolerant, for example, to HPPD inhibitors such as mesotrione, EPSPS inhibitors such as glyphosate or to glufosinate. It is noted that corn is naturally tolerant to mesotrione. In one embodiment of the present invention, the turfgrass is HPPD tolerant.

The composition of the present invention is useful in controlling the growth of undesirable vegetation by pre-emergence or post-emergence application to the locus where control is desired, depending on the crop over which the combination is applied. In one embodiment, therefore, the herbicidal composition of the invention is applied as a pre-emergent application. In a further embodiment, the herbicidal composition of the invention is applied as a post-emergent application.

The mesotrione and the safener of the present invention may be applied either simultaneously or sequentially in any order. If administered sequentially, the components may be administered in any order in a suitable timescale, for example, with no longer than 24 hours between the time of administering the first component and the time of administering the last component. Suitably, all the components are administered within a timescale of a few hours, such as one hour. If the components are administered simultaneously, they may be administered separately or as a tank mix or as a pre-formulated mixture of all the components. In one embodiment the mixture or composition of the present invention may be applied to a crop as a seed treatment prior to planting.

When the method of the present invention refers to the application to turfgrass of a co-formulated composition of mesotrione and safener, the composition comprises both the mesotrione and the safener. For example, the mesotrione and the safener may be homogeneously mixed together with all other formulation components. The components may then be compressed, extruded or granulated to form a solid formulation. Alternatively, the mesotrione and the safener may be mixed together and applied to the surface of a pre-formed solid formulation as a coating, or in a solvent to be absorbed into the granule. Alternatively the mesotrione may be mixed with the other formulation components to form a solid formulation, and the safener later applied to the surface of said solid formulation, or vice versa. Alternatively, the mesotrione and the safener may be in liquid form that is encapsulated to form a 'solid' composition.

When the method of the present invention refers to the separate application (either simultaneously or sequentially) to turfgrass of two compositions, one comprising mesotrione, the other comprising a safener, either or both compositions may be a solid formulation.

In practice, the compositions used in the method of the present invention are applied as a formulation containing various adjuvants and carriers known to or used in the industry.

Emulsifiable concentrates are homogeneous liquid compositions dispersible in water or other liquid and may consist entirely of the active compound with a liquid or solid emulsifying agent, or may also contain a liquid carrier, such as xylene, heavy aromatic naphthas, isophorone and other non-volatile organic solvents. In use, these concentrates are dispersed in water or other liquid and normally applied as a spray to the area to be treated. The amount of active ingredient may range from about 0.5% to about 95% of the concentrate.

Other useful formulations for herbicidal applications include simple solutions of the active ingredients in a solvent in which it is completely soluble at the desired concentration, such as acetone, alkylated naphthalenes, xylene and other organic solvents. Pressurised sprayers, wherein the active ingredient is dispersed in finely-divided form as a result of vaporisation of a low boiling dispersant solvent carrier, may also be used.

It is noted that better levels of turfgrass safety on warm season turfgrasses are generally achieved when formulations of mesotrione and safener are applied as a solid formulation. The compositions of the invention may thus be formulated as granules (and, suitably, as stabilised granules), as wettable powders, as powders or dusts, as flowables, or as controlled release forms such as microcapsules. These formulations may contain as little as about 0.5% to as much as about 95% or more by weight of active ingredient. The optimum amount for any given compound will depend on formulation, application equipment and nature of the plants to be controlled.

Wettable powders are in the form of finely divided particles which disperse readily in water or other liquid carriers. The particles contain the active ingredient retained in a solid matrix. Typical solid matrices include fuller's earth, kaolin clays, silicas and other readily wet organic or inorganic solids. Wettable powders normally contain about 5% to about 95% of the active ingredient plus a small amount of wetting, dispersing or emulsifying agent.

Granular formulations include both extrudates and relatively coarse particles and are usually applied without dilution to the area in which suppression of vegetation is desired. Typical carriers for granular formulations include fertiliser, sand, fuller's earth, attapulgite clay, bentonite clays, montmorillonite clay, vermiculite, perlite, calcium carbonate, brick, pumice, pyrophyllite, kaolin, dolomite, plaster, wood flour, ground corn cobs, ground peanut hulls, sugars, sodium chloride, sodium sulphate, sodium silicate, sodium borate, magnesia, mica, iron oxide, zinc oxide, titanium oxide, antimony oxide, cryolite, gypsum, diatomaceous earth, calcium sulphate and other organic or inorganic materials which absorb or which can be coated with the active compound. Particularly suitable is a fertiliser granule carrier. Granular formulations normally contain about 5% to about 25% active ingredients which may include surface-active agents such as heavy aromatic naphthas, kerosene and other petroleum fractions, or vegetable oils; and/or stickers such as dextrins, glue or synthetic resins. Suitably, the granular formulation may be a stabilised composition which comprises at least one granular substrate material containing at least one metal chelate of mesotrione and a safener. The granular substrate material can be one of the typical carriers mentioned above and/or can be a fertiliser material e.g. urea/formaldehyde fertilisers, urea, potassium chloride, ammonium compounds, phosphorus compounds, sulphur, similar plant nutrients and micronutrients and mixtures or combinations thereof. The metal chelate of mesotrione and the safener may be homogeneously distributed throughout the granule or may be spray impregnated or absorbed onto the granule substrate after the granules are formed.

Dusts are free-flowing admixtures of the active ingredient with finely divided solids such as talc, clays, flours and other organic and inorganic solids which act as dispersants and carriers.

Microcapsules are typically droplets or granules of the active material enclosed in an inert porous shell which allows escape of the enclosed material to the surroundings at controlled rates. Encapsulated granules are generally porous granules with porous membranes sealing the granule pore openings, retaining the active species in liquid form inside the granule pores. Granules typically range from 1 millimetre to 1 centimetre, preferably 1 to 2 millimetres in diameter. Granules are formed by extrusion, agglomeration or prilling, or are naturally occurring. Examples of such materials are vermiculite, sintered clay, kaolin, attapulgite clay, sawdust and granular carbon. Shell or membrane materials include natural and synthetic rubbers, cellulosic materials, styrene-butadiene copolymers, polyacrylonitriles, polyacrylates, polyesters, polyamides, polyureas, polyurethanes and starch xanthates.

Many of these formulations described above include wetting, dispersing or emulsifying agents. Examples are alkyl and alkylaryl sulphonates and sulphates and their salts, polyhydric alcohols; polyethoxylated alcohols, esters and fatty amines. These agents, when used, normally comprise from 0.1% to 15% by weight of the formulation.

Suitable agricultural adjuvants and carriers that are useful in formulating the compositions for use in the invention in the formulation types described above are well known to those skilled in the art. Suitable examples of the different classes are found in the non-limiting list below.

Liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropylene glycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octadecanoic acid, octyl amine acetate, oleic acid, oleylamine, o-xylene, phenol, polyethylene glycol (PEG400), propionic acid, propylene glycol, propylene glycol monomethyl ether, p-xylene, toluene, triethyl phosphate, triethylene glycol, xylene sulfonic acid, paraffin, mineral oil, trichloroethylene, perchloroethylene, ethyl acetate, amyl acetate, butyl acetate, methanol, ethanol, isopropanol, and higher molecular weight alcohols such as amyl alcohol, tetrahydrofurfuryl alcohol, hexanol, octanol, etc. ethylene glycol, propylene glycol, glycerine, N-methyl-2-pyrrolidinone. Water is generally the carrier of choice for the dilution of concentrates.

Suitable solid carriers include talc, titanium dioxide, pyrophyllite clay, silica, attapulgite clay, kieselguhr, chalk, diatomaxeous earth, lime, calcium carbonate, bentonite clay, fuller's earth, fertiliser, cotton seed hulls, wheat flour, soybean flour, pumice, wood flour, walnut shell flour, lignin.

A broad range of surface-active agents may be employed in the compositions. The surface-active agents can be anionic, cationic, non-ionic or polymeric in character and can be employed as emulsifying agents, wetting agents, suspending agents or for other purposes. Typical surface active agents include salts of alkyl sulfates, such as diethanolammonium lauryl sulphate; alkylarylsulfonate salts, such as calcium dodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include pigments, antioxidants, foaming agents, light-blocking agents, compatibilizing agents, sequestering agents, neutralising agents and buffers, corrosion inhibitors, dyes, odorants, spreading agents, penetration aids, micronutrients, emollients, lubricants, sticking agents, and the like. The compositions can also be formulated with particulate fertiliser carriers such as ammonium nitrate, urea.

According to the present invention, there is provided a herbicidal composition comprising mesotrione and a safener compound of formula IV, with the proviso that the composition does not consist of mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; or mesotrione, at least one plant growth regulator (such as trinexapacethyl, prohexadione-calcium, paclobutrazol, uniconazole, mepiquat-chloride and chlormequat-chloride) and the compound of formula IV.

According to the present invention, there is also provided a herbicidal composition comprising mesotrione and a safener compound of formula IV, with the proviso that the composition does not comprise mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; or mesotrione, at least one plant growth regulator and the compound of formula IV.

According to the present invention, there is provided a herbicidal composition consisting essentially of mesotrione and a safener compound of formula IV as active ingredients. Suitably, the herbicidal composition consists of mesotrione and a safener compound of formula IV as active ingredients.

According to the present invention, there is provided a granular composition comprising mesotrione and a safener compound of formula IV.

In addition, further, other biocidally active ingredients or compositions may be combined with the herbicidal composition of this invention. For example, the compositions may contain, in addition to mesotrione and a safener, other herbicides, insecticides, fungicides, bactericides, acaricides, nematicides and/or plant growth regulators, in order to broaden the spectrum of activity. In particular, the composition of the present invention further comprises a herbicide selected from the group consisting of glyphosate, glufosinate, dicamba, s-metolachlor, acetochlor and 2,4-D.

Each of the above formulations can be prepared as a package containing the herbicide together with other ingredients of the formulation (diluents, emulsifiers, surfactants, etc.).

These formulations can be applied to the areas where control is desired by conventional methods. For example, application of granule formulations to established turfgrass may be via distribution by hand held spreader, push spreader or a spreader attached to a tractor. Dust or granular compositions applied to the surface of the soil where turfgrass has been or will be seeded, can be distributed below the surface of the soil by conventional means such as irrigating, discing, dragging or mixing operations.

The present invention can be used in any situation in which weed control is desired, for example in agriculture, on golf courses, sport fields or other professionally managed turfgrass areas or in gardens. The present invention is particularly suitable for the selective control of weeds in turfgrass. Mixtures of mesotrione and safener coated on or impregnated in a fertiliser granule are particularly useful.

### EXAMPLES

### Examples relating to safeners other than cyprosulfamide or formula IV are provided for comparative purposes.

### Example 1

A liquid formulation of mesotrione (Callisto®) was applied to bermudagrass (*Cynodon dactylon x C. dactylon*) and zoysia grass (*Zoysia matrella*) by spray application, with and without safeners, at various rates as show in the table below. Assessments were made at 7, 14 and 21 days after application, to determine percentage growth inhibition, an percentage toxicity (chlorosis and/or burning).

**Table 1: Bermudagrass**

| Herbicide | Herbicide Rate (g ai/ha) | Safener | Safener Rate (g ai/ha) | Percentage toxicity | | |
|---|---|---|---|---|---|---|
| | | | | 7 DAA | 14 DAA | 21 DAA |
| Mesotrione | 280 | None | n/a | 60 | 50 | 50 |
| Mesotrione | 140 | None | n/a | 30 | 10 | 20 |
| Mesotrione | 280 | Formula IV | 140 | 30 | 10 | 30 |
| Mesotrione | 140 | Formula IV | 70 | 15 | 0 | 5 |
| Mesotrione | 280 | Cloquintocetmexyl | 140 | 65 | 50 | 40 |
| Mesotrione | 140 | Cloquintocetmexyl | 70 | 50 | 50 | 35 |
| Mesotrione | 280 | Cyprosulfamide | 140 | 70 | 30 | 40 |
| Mesotrione | 140 | Cyprosulfamide | 70 | 20 | 0 | 25 |
| Mesotrione | 280 | Isoxadifenethyl | 140 | 60 | 40 | 50 |
| Mesotrione | 140 | Isoxadifenethyl | 70 | 40 | 20 | 40 |
| Mesotrione | 280 | Mefenpyrdiethyl | 140 | 50 | 50 | 40 |
| Mesotrione | 140 | Mefenpyrdiethyl | 70 | 40 | 30 | 40 |

**Table 2: Zoysia grass**

| Herbicide | Herbicide Rate (g ai/ha) | Safener | Safener Rate (g ai/ha) | Percentage toxicity | | |
|---|---|---|---|---|---|---|
| | | | | 7 DAA | 14 DAA | 21 DAA |
| Mesotrione | 280 | None | n/a | 15 | 50 | 70 |
| Mesotrione | 140 | None | n/a | 10 | 40 | 50 |
| Mesotrione | 280 | Formula IV | 140 | 0 | 20 | 0 |
| Mesotrione | 140 | Formula IV | 70 | 0 | 0 | 0 |
| Mesotrione | 280 | Cloquintocetmexyl | 140 | 10 | 50 | 75 |
| Mesotrione | 140 | Cloquintocetmexyl | 70 | 10 | 40 | 65 |
| Mesotrione | 280 | Cyprosulfamide | 140 | 10 | 40 | 85 |
| Mesotrione | 140 | Cyprosulfamide | 70 | 10 | 40 | 70 |
| Mesotrione | 280 | Isoxadifenethyl | 140 | 15 | 50 | 80 |
| Mesotrione | 140 | Isoxadifenethyl | 70 | 10 | 50 | 70 |
| Mesotrione | 280 | Mefenpyrdiethyl | 140 | 10 | 50 | 80 |
| Mesotrione | 140 | Mefenpyrdiethyl | 70 | 10 | 50 | 60 |

These results show that safening is achieved when applying to warm season turfgrasses a liquid formulation of mesotrione in combination with a compound of formula IV or cyprosulfamide. Particularly good safening is observed with the compound of formula IV.

## Claims

1. A method of controlling weeds in turfgrass without causing significant injury to the turfgrass, comprising applying to the turfgrass a composition comprising a herbicidally effective amount of mesotrione
and a safener compound selected from the group consisting of cyprosulfamide and the compound of formula IV 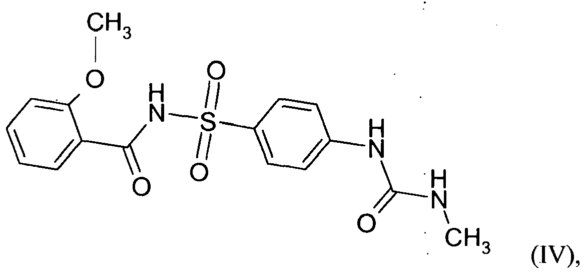 with the proviso that the composition does not consist of mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; mesotrione, at least one plant growth regulator and the compound of formula IV; mesotrione, atrazine and cyprosulfamide; mesotrione, clopyralid and cyprosulfamide; mesotrione, ethofumesate and cyprosulfamide; mesotrione, fenoxaprop-ethyl and cyprosulfamide; mesotrione, imazaquin and cyprosulfamide; mesotrione, oxadiazon and cyprosulfamide; mesotrione, pendimethalin and cyprosulfamide; mesotrione, primisulfuron and cyprosulfamide; or mesotrione, at least one plant growth regulator and cyprosulfamide.

2. A method according to claim 1, wherein the safener is cyprosulfamide.

3. A method according to claim 1, wherein the safener is a compound of formula IV.

4. A method according to claim 1, wherein the composition is a liquid.

5. A method according to claim 1, wherein the composition is a solid.

6. A method according to claim 5, wherein the composition comprises an inert or fertilizer granule.

7. A method according to claim 1, wherein the turfgrass is a warm season turfgrass.

8. A method according to claim 1, wherein the turfgrass is HPPD inhibitor tolerant.

9. A method according to claim 1, wherein the ratio of herbicide to safener is from 20:1 to 1:1.

10. A herbicidal composition comprising mesotrione and a safener compound of formula IV, with the proviso that the composition does not comprise mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; or mesotrione, at least one plant growth regulator and the compound of formula IV.

11. A herbicidal composition according to claim 10 comprising mesotrione and a safener compound of formula IV, with the proviso that the composition does not consist of mesotrione, atrazine and the compound of formula IV; mesotrione, clopyralid and the compound of formula IV; mesotrione, ethofumesate and the compound of formula IV; mesotrione, fenoxaprop-ethyl and the compound of formula IV; mesotrione, imazaquin and the compound of formula IV; mesotrione, oxadiazon and the compound of formula IV; mesotrione, pendimethalin and the compound of formula IV; mesotrione, primisulfuron and the compound of formula IV; or mesotrione, at least one plant growth regulator and the compound of formula IV.

12. A herbicidal composition according to claim 10 or 11, wherein the composition is in a granular form.

13. A herbicidal composition according to any one of claims 10 to 12, further comprising a herbicide selected from the group consisting of glyphosate, glufosinate, dicamba, s-metolachlor, acetochlor and 2-4D.

## Patentansprüche

1. Verfahren zur Bekämpfung von Unkräutern in Rasengras ohne wesentliche Schädigung des Rasengrases, bei dem man auf das Rasengras eine Zusammensetzung ausbringt, die eine herbizid wirksame Menge an Mesotrion und eine Safener-Verbindung, ausgewählt aus der Gruppe bestehend aus Cyprosulfamid und der Verbindung der Formel IV 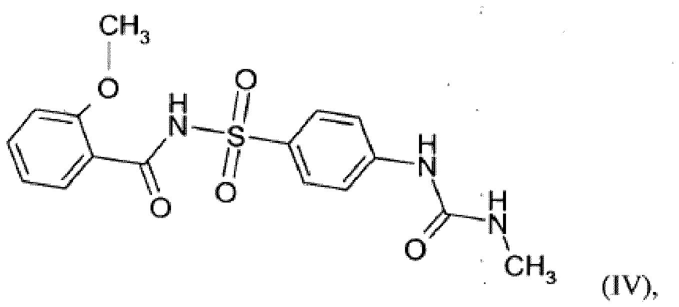 umfasst, mit der Maßgabe, dass die Zusammensetzung nicht aus Mesotrion, Atrazin und der Verbindung der Formel IV; Mesotrion, Clopyralid und der Verbindung der Formel IV; Mesotrion, Ethofumesat und der Verbindung der Formel IV; Mesotrion, Fenoxaprop-ethyl und der Verbindung der Formel IV; Mesotrion, Imazaquin und der Verbindung der Formel IV; Mesotrion, Oxadiazon und der Verbindung der Formel IV; Mesotrion, Pendimethalin und der Verbindung der Formel IV; Mesotrion, Primsulfuron und der Verbindung der Formel IV; Mesotrion, mindestens einem Pflanzenwachstumsregulator und der Verbindung der Formel IV; Mesotrion, Atrazin und Cyprosulfamid; Mesotrion, Clopyralid und Cyprosulfamid; Mesotrion, Ethofumesat und Cyprosulfamid; Mesotrion, Fenoxaprop-ethyl und Cyprosulfamid; Mesotrion, Imazaquin und Cyprosulfamid; Mesotrion, Oxadiazon und Cyprosulfamid; Mesotrion, Pendimethalin und Cyprosulfamid; Mesotrion, Primisulfuron und Cyprosulfamid; oder Mesotrion, mindestens einem Pflanzenwachstumsregulator und Cyprosulfamid besteht.

2. Verfahren nach Anspruch 1, wobei es sich bei dem Safener um Cyprosulfamid handelt.

3. Verfahren nach Anspruch 1, wobei es sich bei dem Safener um eine Verbindung der Formel IV handelt.

4. Verfahren nach Anspruch 1, wobei es sich bei der Zusammensetzung um eine Flüssigkeit handelt.

5. Verfahren nach Anspruch 1, wobei es sich bei der Zusammensetzung um einen Feststoff handelt.

6. Verfahren nach Anspruch 5, wobei die Zusammensetzung ein inertes Granulat oder ein Düngemittelgranulat umfasst.

7. Verfahren nach Anspruch 1, wobei es sich bei dem Rasengras um ein Rasengras für die warme Saison handelt.

8. Verfahren nach Anspruch 1, wobei das Rasengras HPPD-inhibitortolerant ist.

9. Verfahren nach Anspruch 1, wobei das Verhältnis von Herbizid zu Safener 20:1 bis 1:1 beträgt.

10. Herbizide Zusammensetzung, die Mesotrion und eine Safener-Verbindung der Formel IV umfasst, mit der Maßgabe, dass die Zusammensetzung nicht Mesotrion, Atrazin und die Verbindung der Formel IV; Mesotrion, Clopyralid und die Verbindung der Formel IV; Mesotrion, Ethofumesat und die Verbindung der Formel IV; Mesotrion, Fenoxaprop-ethyl und die Verbindung der Formel IV; Mesotrion, Imazaquin und die Verbindung der Formel IV; Mesotrion, Oxadiazon und die Verbindung der Formel IV; Mesotrion, Pendimethalin und die Verbindung der Formel IV; Mesotrion, Primisulfuron und die Verbindung der Formel IV; oder Mesotrion, mindestens einen Pflanzenwachstumsregulator und die Verbindung der Formel IV umfasst.

11. Herbizide Zusammensetzung nach Anspruch 10, die Mesotrion und eine Safener-Verbindung der Formel IV umfasst, mit der Maßgabe, dass die Zusammensetzung nicht aus Mesotrion, Atrazin und der Verbindung der Formel IV; Mesotrion, Clopyralid und der Verbindung der Formel IV; Mesotrion, Ethofumesat und der Verbindung der Formel IV; Mesotrion, Fenoxaprop-ethyl und der Verbindung der Formel IV; Mesotrion, Imazaquin und der Verbindung der Formel IV; Mesotrion, Oxadiazon und der Verbindung der Formel IV; Mesotrion, Pendimethalin und der Verbindung der Formel IV; Mesotrion, Primisulfuron und der Verbindung der Formel IV; oder Mesotrion, mindestens einen Pflanzenwachstumsregulator und der Verbindung der Formel IV besteht.

12. Herbizide Zusammensetzung nach Anspruch 10 oder 11, wobei die Zusammensetzung in Granulatform vorliegt.

13. Herbizide Zusammensetzung nach einem der Ansprüche 10 bis 12, die weiterhin ein Herbizid, das aus der Gruppe bestehend aus Glyphosat, Glufosinat, Dicamba, s-Metolachlor, Acetochlor und 2,4-D ausgewält ist, umfasst.

## Revendications

1. Méthode de contrôle d'adventices dans du gazon sans provoquer de lésions significatives au gazon, comprenant l'application au gazon d'une composition comprenant une quantité efficace sur le plan herbicide de mésotrione
et d'un composé phytoprotecteur choisi dans le groupe constitué par le cyprosulfamide et le composé de formule IV 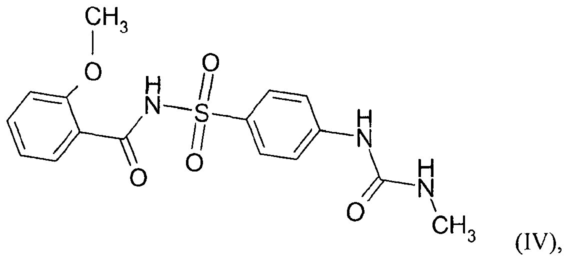 à condition que la composition ne soit pas constituée de mésotrione, d'atrazine et du composé de formule IV ; de mésotrione, de clopyralid et du composé de formule IV ; de mésotrione, d'éthofumésate et du composé de formule IV ; de mésotrione, de fenoxaprop-éthyle et du composé de formule IV ; de mésotrione, d'imazaquin et du composé de formule IV ; de mésotrione, d'oxadiazon et du composé de formule IV ; de mésotrione, de pendiméthaline et du composé de formule IV ; de mésotrione, de primisulfuron et du composé de formule IV ; de mésotrione, d'au moins une substance de croissance et du composé de formule IV ; de mésotrione, d'atrazine et de cyprosulfamide ; de mésotrione, de clopyralid et de cyprosulfamide ; de mésotrione, d'éthofumésate et de cyprosulfamide ; de mésotrione, de fenoxaprop-éthyle et de cyprosulfamide ; de mésotrione, d'imazaquin et de cyprosulfamide ; de mésotrione, d'oxadiazon et de cyprosulfamide ; de mésotrione, de pendiméthaline et de cyprosulfamide ; de mésotrione, de primisulfuron et de cyprosulfamide ; ou de mésotrione,
d'au moins une substance de croissance et de cyprosulfamide.

2. Méthode selon la revendication 1, dans laquelle le phytoprotecteur est le cyprosulfamide.

3. Méthode selon la revendication 1, dans laquelle le phytoprotecteur est un composé de formule IV.

4. Méthode selon la revendication 1, dans laquelle la composition est un liquide.

5. Méthode selon la revendication 1, dans laquelle la composition est un solide.

6. Méthode selon la revendication 5, dans laquelle la composition comprend un granulé inerte ou fertilisant.

7. Méthode selon la revendication 1, dans laquelle le gazon est un gazon de saison chaude.

8. Méthode selon la revendication 1, dans laquelle le gazon est tolérant aux inhibiteurs d'HPPD.

9. Méthode selon la revendication 1, dans laquelle le rapport de l'herbicide au phytoprotecteur va de 20:1 à 1:1.

10. Composition herbicide comprenant de la mésotrione et un composé phytoprotecteur de formule IV, à condition que la composition ne comprenne pas de mésotrione, d'atrazine et de composé de formule IV ; de mésotrione, de clopyralid et de composé de formule IV ; de mésotrione, d'éthofumésate et de composé de formule IV ; de mésotrione, de fenoxaprop-éthyle et de composé de formule IV ; de mésotrione, d'imazaquin et de composé de formule IV ; de mésotrione, d'oxadiazon et de composé de formule IV ; de mésotrione, de pendiméthaline et de composé de formule IV ; de mésotrione, de primisulfuron et de composé de formule IV ; ou de mésotrione, au moins une substance de croissance et de composé de formule IV.

11. Composition herbicide selon la revendication 10, comprenant de la mésotrione et un composé phytoprotecteur de formule IV, à condition que la composition ne comprenne pas de mésotrione, d'atrazine et de composé de formule IV ; de mésotrione, de clopyralid et de composé de formule IV ; de mésotrione, d'éthofumésate et de composé de formule IV ; de mésotrione, de fenoxaprop-éthyle et de composé de formule IV ; de mésotrione, d'imazaquin et de composé de formule IV ; de mésotrione, d'oxadiazon et de composé de formule IV ; de mésotrione, de pendiméthaline et de composé de formule IV ; de mésotrione, de primisulfuron et de composé de formule IV ; ou de mésotrione, au moins une substance de croissance et de composé de formule IV.

12. Composition herbicide selon la revendication 10 ou 11, **caractérisée en ce que** la composition est sous forme granulaire.

13. Composition herbicide selon l'une quelconque des revendications 10 à 12, comprenant en outre un herbicide choisi dans le groupe constitué par le glyphosate, le glufosinate, le dicamba, le s-métolachlor, l'acétochlor et le 2-4D.
